# EUROPÄISCHE PATENTSCHRIFT

(11) **EP 1 037 455 B1**
(45) Veröffentlichungstag und Bekanntmachung des Hinweises auf die Patenterteilung: **22.12.2004**
(21) Anmeldenummer: 00105503.7
(22) Anmeldetag: 15.03.2000
(51) Int. Cl.: G06F 17/60, H04M 15/00, G06F 17/22, G06F 17/30, H04Q 3/00

(54) **Telekommunikationsanlage mit Gebührenabrechnung und Verfahren zur Übertragung gebührenabrechnungsrelevanter Datensätze**
Telecommunications system with call charge billing and method for transmitting relevant billing data sets
Système de télécommunication avec facturation et méthode pour la transmission des blocs de données en rapport de la facturation

(30) Priorität: 16.03.1999 DE 19911691
(43) Veröffentlichungstag der Anmeldung: 20.09.2000
(73) Patentinhaber: SIEMENS AKTIENGESELLSCHAFT, 80333 München (DE)
(72) Erfinder: Neuhaus, Ralf, 44534 Lünen (DE)

(56) Entgegenhaltungen:
- WO-A-97/40456
- US-A- 5 799 310
- MAUNDER A: "DAWN OF A NEW ERA IN BILLING SYSTEMS: THE INFORMATION AGE" ANNUAL REVIEW OF COMMUNICATIONS, NATIONAL ENGINEERING CONSORTIUM, CHICAGO, IL, US, Bd. 50, 1997, Seiten 1067-1071, XP000720972 ISSN: 0886-229X

## Beschreibung

Die Erfindung betrifft eine Telekommunikationsanlage mit mindestens einem Anschluß an ein öffentliches Telekommunikationsnetz, einer Prozessoreinheit mit Programmspeicher zur Ausführung gespeicherter Programme, einer Vielzahl von Kommunikationsanschlüssen für Telekommunikationsendgeräte, einer Vielzahl von Telekommunikationsendgeräten, die mit der Telekommunikationsanlage über die Kommunikationsanschlüsse verbunden sind, einem Mittel zur Erfassung und Speicherung gebührenabrechnungsrelevanter Daten, und einer Datenschnittstelle zu einem externen Datenverarbeitungsgerät mit einer Bedienvorrichtung und einer Ausgabevorrichtung.

Weiterhin betrifft die Erfindung ein Verfahren zur Übertragung zuvor in einer Telekommunikationsanlage erfaßten und gespeicherten abrechnungsrelevanten Datensätzen und Darstellung auf einem Sichtschirm eines Datenverarbeitungsgerätes.

Heutige Telekommunikationsanlagen bieten die Möglichkeiten, zu allen innerhalb dieser Telekommunikationsanlage geführten Gesprächen einen Gesprächsdatensatz zu generieren und zu speichern, der alle für ein Gespräch relevanten Daten enthält, wie beispielsweise Datum, Uhrzeit, Gesprächsdauer, interner Teilnehmer, externe Rufnummer, angefallene Gebühren, Projektkennzahl, Art des Gespräches usw. Diese Datensätze können über eine Systemschnittstelle an ein extern angeschlossenes Datenverarbeitungsgerät zur weiteren Verarbeitung ausgegeben werden. Bekannt sind solche Telekommunikationsanlagen und -verfahren beispielsweise aus heutigen Telekommunikationslagen wie Siemens Hicom 100E, Hicom 150E, Hicom 300E, Octopus E10, E20, E30, E300 (Octopus=TK-Anlage der Deutschen Telekom) und vergleichbare am Markt befindliche TK-Anlagen (z.B. von Alcatel, Lucent, Bosch, ...).

Ein Problem dieser Telekommunikationsanlagen besteht darin, daß jede einzelne Telekommunikationsanlage ein spezifisches datenverarbeitungsgerätseitiges EDV-Programm benötigt, um die gespeicherten Datensätze auszugeben und anzuzeigen. Hierdurch ergeben sich einerseits Kosten für den Hersteller, da für jede Telekommunikationsanlage eine entsprechende Software und zwar spezifisch für die entsprechende Plattform mit der die Datenverarbeitungsanlage arbeitet bereitgestellt werden muß. Weiterhin muß jeder Nutzer die jeweils spezielle Software vorrätig und auf seinem Datenverarbeitungsgerät gespeichert haben, um die entsprechenden Gesprächsdaten abrufen zu können.

Es ist daher Aufgabe der Erfindung eine Telekommunikationsanlage zur Verfügung zu stellen, die mit allgemein üblichen und jedem zur Verfügung stehenden Programm-Ressourcen in der Lage ist die erfaßten und gespeicherten gebührenrelevanten Datensätze auszugeben und anzuzeigen. Ebenso soll ein entsprechendes Verfahren angegeben werden.

Die Aufgabe der Erfindung wird durch die Merkmale des ersten Vorrichtungsanspruches und des ersten Verfahrensanspruches gelöst.

Demgemäß schlägt der Erfinder vor, die bekannte Telekommunikationsanlage mit mindestens einem Anschluß an ein öffentliches Telekommunikationsnetz, einer Prozessoreinheit mit Programmspeicher zur Ausführung gespeicherter Programme, einer Vielzahl von Kommunikationsanschlüssen für Telekommunikationsendgeräte, einer Vielzahl von Telekommunikationsendgeräten, die mit der Telekommunikationsanlage über die Kommunikationsanschlüsse verbunden sind, einem Mittel zur Erfassung und Speicherung gebührenabrechnungsrelevanter Daten, und einer Datenschnittstelle zu einem externen Datenverarbeitungsgerät mit einer Bedienvorrichtung und einer Ausgabevorrichtung dahingehend weiterzuentwickeln, daß ein Mittel (Verarbeitungsmodul) zur Konvertierung der gebührenabrechnungsrelevanten, gespeicherten Daten in ein HTML-Format (HTML=Hypertext Markup Language, Standard im Internet für die Erzeugung grafischer Oberflächen durch Nutzung spezieller HTML-Befehlssequenzen innerhalb eines ASCII-Textes) und ein Mittel (Kommunikationsmodul) zur Übertragung der im HTML-Format vorliegenden gebührenabrechnungsrelevanten Daten über die Datenschnittstelle zu dem externen Datenverarbeitungsgerät nach dem TCP/IP-Protokoll (TCP/IP=Transmission Control Protocol / Internet Protocol, das im Internet und in lokalen Rechnernetzen genutzte Datenprotokoll für paketvermittelte Daten) und dem HTTP-Protokoll (HTTP=Hypertext Transport Protocol, Standard im Internet für die Übertragung von HTML-Seiten und enthaltener Komponenten) vorgesehen ist.

Durch diese Ausführung der Telekommunikationsanlage ist es nun möglich sich beispielsweise mit einem Personal Computer, der mit einem allgemein üblichen und zur Verfügung stehenden Web-Browser (zum Beispiel Netscap oder Internet-Explorer) an die Telekommunikationsanlage anzukoppeln und die Gebührenabrechnungsdaten auszulesen.

Die Realisierung des Mittels zur Konvertierung der Gebührenabrechnungsdaten und das Mittel zur Übertragung der Daten kann einerseits durch ein Programm-Modul durchgeführt werden, daß über einen Mikroprozessor in der Telekommunikationsanlage abgearbeitet wird, oder es besteht auch die - allerdings wesentlich aufwendigere - Möglichkeit diese Mittel hardwaremäßig auszuführen.

Eine Weiterentwicklung der erfindungsgemäßen Telekommunikationsanlage besteht darin, daß zusätzlich ein Mittel zur Übertragung eines Programm-Codes (zum Beispiel eines JAVA-Applet) vorgesehen ist. Durch diese Ausgestaltung wird die Möglichkeit eröffnet Web-Browsern, welche Programmiersprachen wie Java oder ActiveX unterstützen, seitens des Telekommunikationsgerätes zu steuern und die Abfrage der gebührenabrechnungsrelevanten Daten komfortabel und einfach in der Bedienung zu gestalten.

Als Datenschnittstelle zum externen Datenverarbeitungsgerät kann beispielsweise eine serielle Datenschnittstelle - zum Beispiel nach dem V24 oder RS 232 Standard - verwendet werden, oder es besteht auch die Möglichkeit eine Netzwerkschnittstelle zu verwenden und die Telekommunikationsanlage über ein Standard-Computer-Netzwerk mit einer Arbeitsstation zu verbinden. Beispiele hierfür sind ein NOVELL-, MICROSOFT-, oder UNIX-Netzwerk, wobei die Datenschnittstelle für Ethernet-, Twisted-Pair- oder Token-Ring-Verbindungen ausgelegt sein kann. In diesem Fall fungiert die Telekommunikationsanlage als Arbeitsstation im Computernetz.

Das externe Datenverarbeitungsgerät kann beispielsweise ein Personal Computer, ein HTML-Format verarbeitender Fernseher oder ein Personal Digital Assistent, ein Note Book oder ein sonstiges Gerät, das als Web-Browser eingesetzt werden kann, sein.

Weiterhin schlägt der Erfinder ein Verfahren zur Übertragung von zuvor in einer Telekommunikationsanlage erfaßter und gespeicherter gebührenabrechnungsrelevanter Datensätze aus der Telekommunikationsanlage und zur Darstellung auf einem Sichtschirm eines Datenverarbeitungsgerätes vor, bei dem die Datensätze in ein HTML-Format konvertiert werden, die im HTML-Format vorliegenden gebührenabrechnungsrelevanten Daten nach einem TCP/IP-Protokoll und HTTP-Protokoll an ein mit der Telekommunikationsanlage verbundenes Datenverarbeitungsgerät über eine Datenschnittstelle übertragen werden und anschließend mit Hilfe eines, das HTML-Format verarbeitenden Programmes, angezeigt werden.

Eine vorteilhafte Ausgestaltung besteht darin, daß zusätzlich zur übertragenen HTML-Datei auch ein Java-Applet übertragen und vom empfangenen Datenverarbeitungsgerät abgearbeitet wird, wobei auf vorteilhafte Weise die Übertragung der HTML-Datei durch die Anforderung des Datenverarbeitungsgerätes initiiert werden kann.

Bei der Initiierung der Datenübertragung kann es weiterhin vorteilhaft sein, wenn zumindest ein, in der Telekommunikationsanlage gespeichertes Passwort und/oder eine Nutzerkennung vom Datenverarbeitungsgerät an die Telekommunikationsanlage übertragen wird. Hierdurch kann sichergestellt werden, daß nur berechtigte Personen die Datensätze beziehungsweise nur für sie freigegebene Datensätze abrufen können.

Gemäß einer besonderen Ausgestaltung des Verfahrens beinhaltet dieses die folgenden Verfahrensschritte:
- von dem mit einem Web-Browser ausgestatteten Datenverarbeitungsgerät wird eine HTML-Seite von einem Kommunikationsmodul (B) angefordert, über die Datenverbindung in den Web-Browser geladen und am Datenverarbeitungsgerät mit der Browseroberfläche dargestellt, wobei das Laden über den TCP/IP-Zugang zur Telekommunikationsanlage erfolgt,
- gleichzeitig wird ein in der HTML-Seite referenziertes Oberflächenmodul (C) in den Web-Browser geladen und automatisch in eine umgebungsspezifische Maschinensprache übersetzt,
- nach der Eingabe von benutzerspezifischen Daten (z.B. Name, Passwort, Anfangs- und Enddatum) wird der Start der Verarbeitung veranlaßt und eine entsprechende Meldung mit den notwendigen Parametern über das Kommunikationsmodul an ein Verarbeitungsmodul gesendet,
- das Kommunikationsmodul (B) liest gemäß einer Anforderung durch das Oberflächenmodul (C) die erfaßten und gespeicherten gebührenabrechnungsrelevanten Datensätze aus und übergibt sie nach Anforderung an das Oberflächenmodul (C),
- gleichzeitig wird vom Verarbeitungsmodul (A) dynamisch eine neue HTML-Seite mit gebührensabrechnungsrelevanten Datensätzen im Speicher der Telekommunikationsanlage erzeugt,
- nach Fertigstellung der HTML-Seite sendet das Verarbeitungsmodul (A) über das Kommunikationsmodul (B) einen entsprechenden Datensatz an das Oberflächenmodul (C), und
- dieses lädt daraufhin die fertiggestellte HTML-Seite in den Web-Browser des Datenverarbeitungsgerätes.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnungen.

Ein besonders bevorzugtes Ausführungsbeispiel der Erfindung wird nachstehend unter Bezugnahme auf die Zeichnung näher erläutert. Es zeigen im einzelnen:
Figur 1: Schematische Darstellung einer Telekommunikationsanlage mit Datenverarbeitungsgerät;
Figur 2: Beispiel einer übertragenen HTML-Datei;
Figur 3 + 4: beispielhafte Bildschirmdarstellung der ausgeführten HTML-Datei.

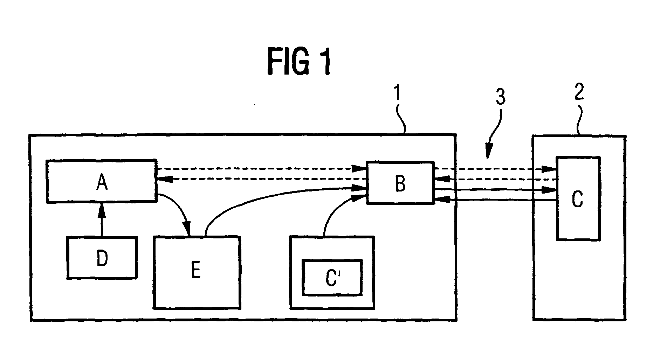

Die Figur 1 zeigt eine schematische Darstellung einer erfindungsgemäßen Telekommunikationsanlage 1, die über eine Datenleitung 3 mit einem Datenverarbeitungsgerät 2 in Verbindung steht. Die selbstverständlich vorhandenen Anschlüsse für das öffentliche Telekommunikationsnetz und die mit der Telekommunikationsanlage verbundenen Telekommunikationsendgeräte, wie Telefon, Fax und ähnliches, sind in dieser Darstellung aus Übersichtlichkeitsgründen weggelassen.

In der Telekommunikationsanlage 1 befindet sich - durch Softwaremodule in Verbindung mit einem Mikroprozessor verwirklicht - ein Verarbeitungsmodul A, welches mit dem Kommunikationsmodul B in Verbindung steht, das wiederum die Daten über die Datenleitung 3 an das Datenverarbeitungsgerät 2 sendet, welches die übertragenen Daten über ein Oberflächenmodul, welches ebenfalls softwarerealisiert ist, zur Anzeige bringt. Das Verarbeitungsmodul A benutzt die im Speicher D der Telekommunikationsanlage abgespeicherten gebührenabrechnungsrelevanten Datensätze und konvertiert diese in ein HTML-Format. Hierbei werden die vom Oberflächenmodul C des Datenverarbeitungsgerätes 2 angeforderten Parameter berücksichtigt, das heißt beispielsweise, daß nur die Gesprächsdaten für ein bestimmten Nutzer der Telekommunikationsanlage oder nur für einen bestimmten Zeitraum verarbeitet werden. Die HTML-Seiten werden dabei dynamisch entsprechend den angeforderten Datenmengen im Speicher E der Telekommunikationsanlage abgelegt. Bei der Darstellung können die Möglichkeiten eines Web-Browsers genutzt werden, so daß sich ohne großen Aufwand Tabellen, Überschriften, Aufzählungen, Grafiken, animierte Grafiken, Hintergrundbilder oder Hyperlinks oder ähnliches mit in die Darstellung integrieren lassen.

Bei der ersten Verbindung zwischen dem Datenverarbeitungsgerät 2 und der Telekommunikationsanlage 1 überträgt das Kommunikationsmondul das in der Telekommunikationsanlage abgespeicherte Oberflächenmodul C' an das Datenverarbeitungsgerät 2, welches das Oberflächenmodul - jetzt als C bezeichnet - in einen Web-Browser integriert und für die Darstellung der angezeigten Daten verwendet. Zusätzlich kann neben dem Oberflächenmodul selbst auch ein oder mehrere Java-Applets übertragen werden, die eine komfortablere Nutzerführung gestatten.

Ist eine HTML-Seite im Speicher E abgelegt, so wird dies dem Oberflächenmodul C gemeldet, welches dann automatisch die HTML-Seite in das abfragende Datenverarbeitungsgerät lädt. Das Oberflächenmodul C ist in einem Web-Browser integriert, der dann für die Darstellung der Daten sorgt. Durch die Nutzung des HTML-Internetstandards ist die Menge der Daten, die zwischen dem Kommunikationsmodul B und dem Oberflächenmodul C zu übertragenden Daten minimal, es handelt sich um reinen ASCII-Text. Die zur Umwandlung der HTML-Befehle in eine grafische Oberfläche notwendige Komponenten sind bei dem abfragenden Anzeigegerät aufgrund der Internet-Browser-Funktionalität standardmäßig vorhanden, so daß auch hier keine spezifischen Anforderungen an das Datenverarbeitungsgerät notwendig sind. Vorteilhaft kann natürlich auch die an einem Bildschirm gezeigte Darstellung eines erzeugten Berichtes über die gebührenabrechnungsrelevanten Daten direkt aus dem Web-Browser ausgedruckt werden.

Das Kommunikationsmodul B, welches die Kommunikation zwischen dem Verarbeitungsmodul A und dem Oberflächenmodul C nach dem TCP/IP-Protokoll ausführt, stellt einfache HTTP-Funktionen zur Verfügung, die das Laden einer HTML-Seite und der darin enthaltenen Komponenten ermöglichen.

Auf der Seite des Datenverarbeitungsgerätes liefert das Oberflächenmodul C die Voraussetzung zu interaktiven Einstellung aller Parameter für das Verarbeitungsmodul A auf einer grafischen Oberfläche. Weiterhin ermöglicht es die Eingabe aller erforderlichen Auswertungsparameter und die Darstellung der Auswertungsergebnisse.

Dieses kann beispielsweise als Java-Applet realisiert werden, das in einer HTML-Seite eingebunden wird. Hierbei liest ein Browser diese HTML-Seite ein und lädt den notwendigen Java-Applet-Code über die Datenverbindung 3 aus der Telekommunikationsanlage 1 ein. Die Übersetzung des enthaltenen Java-Applets in die endgültige maschinenabhängige Sprache erfolgt durch eine sogenannte "virtuelle Java-Maschine" oder einen "Just-In-Time-Compiler" innerhalb des Browsers, in dem die HTML-Seite angezeigt wird. Das heißt, das Applet wird automatisch in die in dem verwendeten Datenverarbeitungsgerät erforderliche Maschinensprache übersetzt. Durch diese Art der Datenübertragung ist es also möglich ein beliebiges Datenverarbeitungsgerät mit einem Standardprogramm eines Web-Browsers zu verwenden, um die gebührenabrechnungsrelevanten Daten aus der erfindungsgemäßen Telekommunikationsanlage auszulesen.

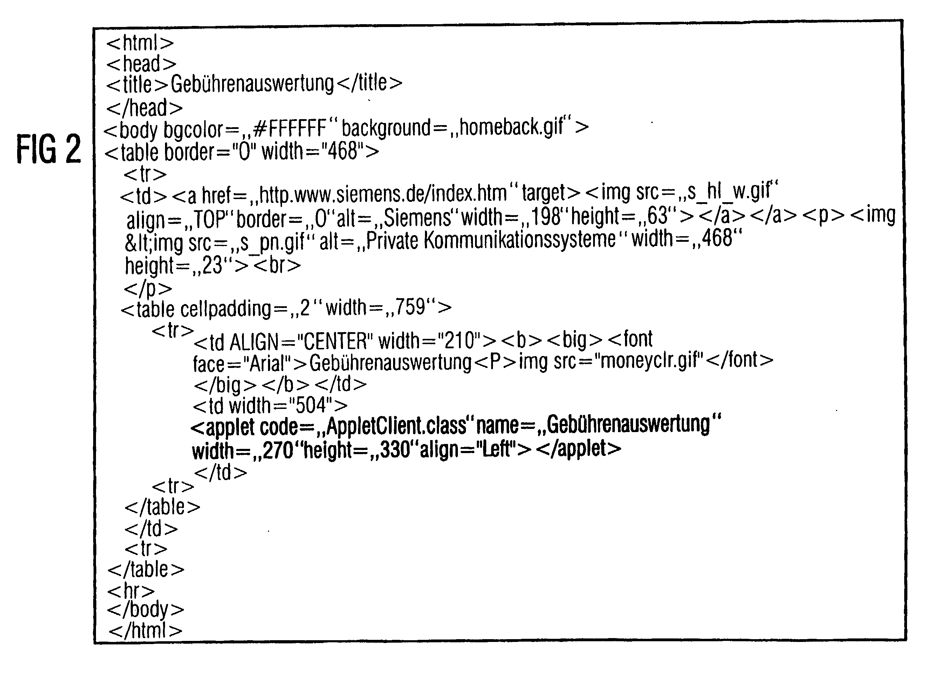

Die Figur 2 zeigt ein Beispiel einer HTML-Startdatei, in die das Oberflächenmodul "AppletClient.class" eingebunden ist (fett gedruckt). Diese Datei wird mit den dazugehörigen Komponenten in der Telekommunikationsanlage abgelegt und über die Datenleitung 3 in das Datenverarbeitungsgerät übergeben.

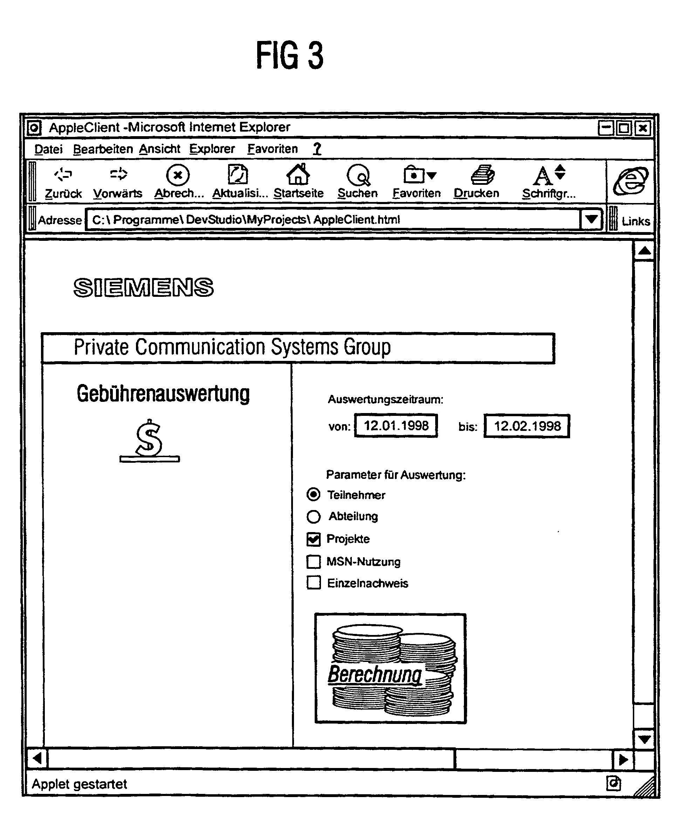

Wenn der Browser die in der Figur 2 dargestellte Datei über das Kommunikationsmodul B lädt und den HTML-Code und das enthaltene Oberflächenmodul übersetzt, so erhält er eine Darstellung, wie sie in der Figur 3 als Bildschirmauszug eines Microsoft-Internet-Explorers gezeigt ist.

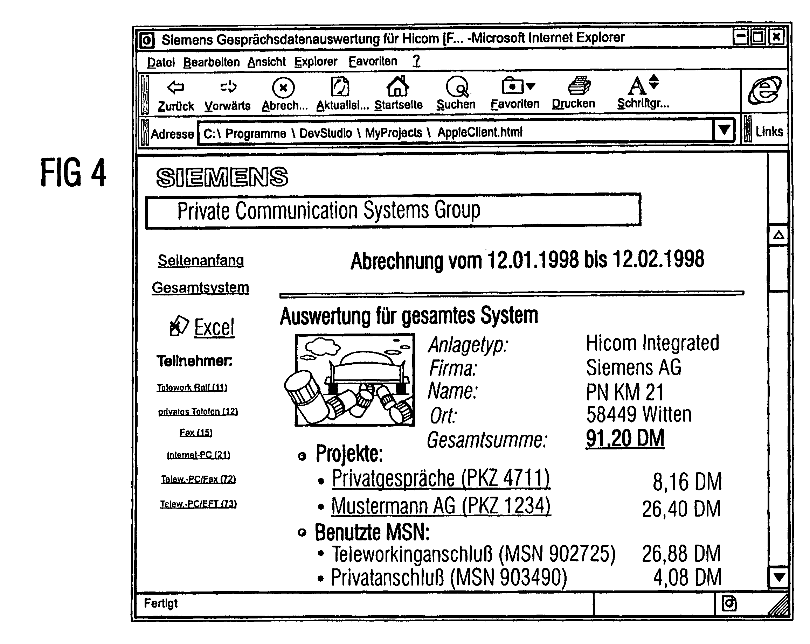

Wählt der Benutzer die für ihn interessanten Optionen und startet das Verarbeitungsmodul A mit einem Klick auf den Button "Berechnung", so erzeugt das Verarbeitungsmodul daraufhin dynamisch die HTML-Berichtseite auf Basis der durch das Oberflächenmodul C angeforderten Randbedingungen und zeigt auf seinem Bildschirm die in der Figur 4 dargestellte Bildschirmseite. Der Benutzer kann nun innerhalb der angezeigten HTML-Seite mit Hilfe der (unterstrichenen) Hyperlinks navigieren und gezielt einzelne Stellen anspringen oder in weitere HTML-Seiten verzweigen.

## Patentansprüche

1. Telekommunikationsanlage (1) mit mindestens:
- einem Anschluß an ein öffentliches Telekommunikationsnetz,
- einer Prozessoreinheit mit Programmspeicher zur Ausführung gespeicherter Programme,
- einer Vielzahl von Kommunikationsanschlüssen für Telekommunikationsendgeräte,
- einem Mittel zur Erfassung und Speicherung gebührenabrechnungsrelevanter Daten, und
- einer Datenschnittstelle zu einem externen Datenverarbeitungsgerät (2) mit einer Bedienvorrichtung und einer Ausgabevorrichtung,
**dadurch gekennzeichnet, daß**
- ein Mittel (A) zur Konvertierung der gebührenabrechnungsrelevanten, gespeicherten Daten in ein HTML-Format, Hypertext Markup Language,
- ein Mittel (B) zur Übertragung der im HTML-Format vorliegenden gebührenabrechnungsrelevanten Daten über die Datenschnittstelle zu dem externen Datenverarbeitungsgerät (2) nach dem TCP/IP-Protokoll, Transmission Control Protocol /Internet Protocol, und dem HTTP-Protokoll, Hypertext Transport Protocol, vorgesehen ist.

2. Telekommunikationsanlage gemäß Anspruch 1, **dadurch gekennzeichnet, daß** zusätzlich ein Mittel zur Übertragung eines Programm-Codes, zum Beispiel ein JAVA-Applet, vorgesehen ist.

3. Telekommunikationsanlage gemäß einem der Ansprüche 1-2, **dadurch gekennzeichnet, daß** die mindestens eine Datenschnittstelle zum externen Datenverarbeitungsgerät (2) eine serielle Datenschnittstelle, z.B. V24, RS232, ist.

4. Telekommunikationsanlage gemäß einem der Ansprüche 1-3, **dadurch gekennzeichnet, daß** mindestens eine Datenschnittstelle zum externen Datenverarbeitungsgerät (2) eine Netzwerkschnittstelle, z.B. in ein NOVELL®, MICROSOFT®, oder UNIX-Netzwer, ist.

5. Telekommunikationsanlage gemäß einem der Ansprüche 1-4, **dadurch gekennzeichnet, daß** das Mittel (A) zur Konvertierung der gebührenabrechnungsrelevanten, gespeicherten Daten in ein HTML-Format ein Programm-Modul für einen Prozessor ist.

6. Telekommunikationsanlage gemäß einem der Ansprüche 1-5, **dadurch gekennzeichnet, daß** das Mittel (B) zur Übertragung der im HTML-Format vorliegenden Daten über die Datenschnittstelle zu dem externen Datenverarbeitungsgerät (2) nach dem TCP/IP-Protokoll ein Programm-Modul für einen Prozessor ist.

7. Telekommunikationsanlage gemäß einem der Ansprüche 1-6, **dadurch gekennzeichnet, daß** das externe Datenverarbeitungsgerät (2) ein Personal Computer, ein HTML-Format verarbeitender Fernseher oder ein Personal Digital Assistent ist.

8. Verfahren zur Übertragung zuvor in einer Telekommunikationsanlage (1) erfaßter und gespeicherter gebührenabrechnungsrelevanter Datensätze aus der Telekommunikationsanlage und Darstellung auf einem Sichtschirm eines Datenverarbeitungsgerätes (2), **dadurch gekennzeichnet, daß** die Datensätze in ein HTML-Format konvertiert werden, die im HTML-Format vorliegenden gebührenabrechnungsrelevanten Daten nach einem TCP/IP-Protokoll und HTTP-Protokoll an ein mit der Telekommunikationsanlage (1) verbundenes Datenverarbeitungsgerät (2) über eine Datenschnittstelle übertragen werden und anschließend mit Hilfe eines, das HTML-Format verarbeitenden Programmes, z.B. Web-Browser, angezeigt werden.

9. Verfahren gemäß dem vorstehenden Verfahrensanspruch 8, **dadurch gekennzeichnet, daß** zusätzlich zur übertragenen HTML-Datei auch ein JAVA-Applet übertragen und vom empfangenen Datenverarbeitungsgerät (2) abgearbeitet wird.

10. Verfahren gemäß einem der vorstehenden Verfahrensansprüche 8 bis 9, **dadurch gekennzeichnet, daß** die Übertragung der HTML-Datei durch die Anforderung des Datenverarbeitungsgerätes (2) initiiert wird.

11. Verfahren gemäß dem vorstehenden Verfahrensanspruch 10, **dadurch gekennzeichnet, daß** zur Initiierung zumindest ein in der Telekommunikationsanlage (1) gespeichertes Passwort und/oder eine Nutzerkennung vom Datenverarbeitungsgerät (2) an die Telekommunikationsanlage (1) übertragen wird.

12. Verfahren gemäß einem der vorstehenden Verfahrensansprüche 8 bis 11, **gekennzeichnet durch** die folgenden Verfahrensschritte:
- von dem mit einem Web-Browser ausgestatteten Datenverarbeitungsgerät (2) wird eine HTML-Seite von einem Kommunikationsmodul (B) angefordert, über die Datenverbindung (3) in den Web-Browser geladen und am Datenverarbeitungsgerät (2) mit der Browseroberfläche dargestellt, wobei das Laden über den TCP/IP-Zugang zur Telekommunikationsanlage (1) erfolgt,
- gleichzeitig wird ein in der HTML-Seite referenziertes Oberflächenmodul (C) in den Web-Browser geladen und automatisch in eine umgebungsspezifische Maschinensprache übersetzt,
- nach der Eingabe von benutzerspezifischen Daten, z.B. Name, Passwort, Anfangs- und Enddatum, wird der Start der Verarbeitung veranlaßt und eine entsprechende Meldung mit den notwendigen Parametern über das Kommunikationsmodul (B) an ein Verarbeitungsmodul (A) gesendet,
- das Kommunikationsmodul (B) liest gemäß einer Anforderung **durch** das Oberflächenmodul (C) die erfaßten und gespeicherten gebührenabrechnungsrelevanten Datensätze aus und übergibt sie nach Anforderung an das Oberflächenmodul (C),
- gleichzeitig wird vom Verarbeitungsmodul (A) dynamisch eine neue HTML-Seite mit gebührenabrechnungsrelevanten Datensätzen im Speicher der Telekommunikationsanlage (1) erzeugt,
- nach Fertigstellung der HTML-Seite sendet das Verarbeitungsmodul (A) über das Kommunikationsmodul (B) einen entsprechenden Datensatz an das Oberflächenmodul (C), und
- dieses lädt daraufhin die fertiggestellte HTML-Seite in den Web-Browser des Datenverarbeitungsgerätes (2).

## Claims

1. Telecommunication system (1) with at least:
- one connection to a public telecommunication network,
- a processor unit with program storage for the execution of stored programs,
- numerous communication lines for telecommunication terminal devices,
- a means of recording and storing billing-related data, and
- a data interface to an external data processing device (2) with an operating facility and an output facility, **characterised in that**
- a means (A) is provided for converting the stored billing-related data into an HTML format, Hypertext Markup Language,
- a means (B) is provided for transmitting the billing-related data which is available in the HTML format via the data interface to the external data processing device (2) in accordance with the TCP/IP protocol, Transmission Control Protocol / Internet Protocol and the HTTP protocol, Hypertext Transport Protocol.

2. Telecommunication system in accordance with Claim 1, **characterised in that** a means is also provided for transmitting program code, for example a JAVA applet.

3. Telecommunication system in accordance with one of the Claims 1-2, **characterised in that** the one or more data interfaces to the external data processing device (2) are serial data interfaces, e.g. V24, RS232.

4. Telecommunication system in accordance with one of the Claims 1-3, **characterised in that** at least one data interface to the external data processing device (2) is a network interface, e.g. in a NOVELL®, MICROSOFT® or UNIX network.

5. Telecommunication system in accordance with one of the Claims 1-4, **characterised in that** the means (A) for converting the stored billing-related data into an HTML format is a program module for a processor.

6. Telecommunication system in accordance with one of the Claims 1-5, **characterised in that** the means (B) for transmitting the data available in HTML format via the data interface to the external data processing device (2) in accordance with the TCP/IP protocol is a program module for a processor.

7. Telecommunication system in accordance with one of the Claims 1-6, **characterised in that** the external data processing device (2) is a personal computer, a remote display which processes the HTML format, or a personal digital assistant.

8. Method for transmitting from a telecommunication system billing-related records which have previously been recorded and saved in the telecommunication system (1), and for displaying them on a visual display screen of a data processing device (2), **characterised in that** the records are converted into an HTML format, the billing-related data which is available in the HTML format is transmitted via a data interface in accordance with the TCP/IP protocol to a data processing device (2) linked to the telecommunication system (1) and is then displayed with the help of a program which processes the HTML format, e.g. a Web browser.

9. Method in accordance with the above method Claim 8, **characterised in that**, in addition to the HTML file which is transmitted, a JAVA applet is also transmitted and is processed by the received data processing device (2).

10. Method in accordance with one of the above method Claims 8 to 9, **characterised in that** the transmission of the HTML file is initiated by a request from the data processing device (2).

11. Method in accordance with the above method Claim 10, **characterised in that**, for the purpose of the initiation, at least a password and/or user identifier stored in the telecommunication system (1) is transmitted from the data processing device (2) to the telecommunication system (1).

12. Method in accordance with one of the above method Claims 8 to 11, **characterised by** the following method steps:
- the data processing device (2) which is equipped with a web browser requests from a communication module (B) an HTML page, which is loaded via the data link (3) into the Web browser and is displayed on the data processing device (2) using the browser interface, the loading taking place via the TCP/IP access to the telecommunication system (1),
- at the same time, an interface module (C) which is referred to in the HTML page is loaded into the Web browser and is automatically translated into an environment-specific machine language,
- after the input of user-specific data, e.g. name, password, start and end dates, the start of the processing is requested and a corresponding message with the necessary parameters is sent via the communication module (B) to a processing module (A),
- the communication module (B) reads out the recorded and stored billing-related records in accordance with a request by the interface module (C), and passes them as requested to the interface module (C),
- at the same time, a new HTML page with billing-related records is created dynamically by the processing module (A) in the storage of the telecommunication system (1),
- when the HTML page is complete, the processing module (A) sends a corresponding record via the communication module (B) to the interface module (C), and
- the latter then loads the complete HTML page into the Web browser on the data processing device (2).

## Revendications

1. Système de télécommunication (1 ) comprenant au moins:
- un raccordement à un réseau de télécommunication public,
- une unité de processeur avec une mémoire de programme pour exécuter des programmes enregistrés,
- une pluralité de raccordements de communication pour terminaux de télécommunication,
- un moyen pour la saisie et l'enregistrement de données pertinentes pour la facturation et
- une interface de données vers un appareil externe de traitement de données (2) avec un dispositif de commande et un dispositif de sortie,
**caractérisé en ce que** sont prévus
- un moyen (A) pour convertir dans un format HTML, Hypertext Markup Language, les données enregistrées pertinentes pour la facturation et
- un moyen (B) pour transmettre les données pertinentes pour la facturation, disponibles en format HTML, par l'intermédiaire de l'interface de données vers l'appareil externe de traitement de données (2) selon le protocole TCP/IP, Transmission Contre) Protocol / Internet Protocol, et le protocole HTTP, Hypertext Transport Protocol.

2. Système de télécommunication selon la revendication 1, **caractérisé en ce qu'**est additionnellement prévu un moyen pour la transmission d'un code de programme, par exemple un applet Java.

3. Système de télécommunication selon l'une des revendications 1 à 2, **caractérisé en ce que** l'au moins une interface de données vers l'appareil externe de traitement de données (2) est une interface de données sérielle, par exemple V24, RS 232.

4. Système de télécommunication selon l'une des revendications 1 à 3, **caractérisé en ce que** l'au moins une interface de données vers l'appareil externe de traitement de données (2) est une interface réseau, par exemple dans un réseau NOVELL®, MICROSOFT® ou UNIX.

5. Système de télécommunication selon l'une des revendications 1 à 4, **caractérisé en ce que** le moyen (A) pour convertir dans un format HTML les données enregistrées pertinentes pour la facturation est un module de programme pour un processeur.

6. Système de télécommunication selon l'une des revendications 1 à 5, **caractérisé en ce que** le moyen (B) pour la transmission des données disponibles en format HTML par l'intermédiaire de l'interface de données vers l'appareil externe de traitement de données (2) selon le protocole TCP/IP est un module de programme pour un processeur.

7. Système de télécommunication selon l'une des revendications 1 à 6, **caractérisé en ce que** l'appareil externe de traitement de données (2) est un ordinateur personnel, un téléviseur traitant le format HTML ou un assistant numérique personnel (Personal Digital Assistent).

8. Méthode pour la transmission, au départ du système de télécommunication, de blocs de données pertinents pour la facturation, préalablement saisis et enregistrés dans un système de télécommunication (1), et pour leur représentation sur un écran de visualisation d'un appareil de traitement de données (2), **caractérisée en ce que** les blocs de données sont convertis dans un format HTML, les données pertinentes pour la facturation, disponibles en format HTML, sont transmises, selon un protocole TCP/IP et un protocole HTTP, à un appareil de traitement de données (2) relié au système de télécommunication (1) par l'intermédiaire d'une interface de données et sont ensuite affichées à l'aide d'un programme traitant le format HTML, un browser Web, par exemple.

9. Méthode selon la revendication 8 précédente relative à la méthode, **caractérisée en ce qu'**un applet Java est également transmis, en plus du fichier HTML transmis, et est exécuté par l'appareil de traitement de données (2) après réception.

10. Méthode selon l'une des revendications précédentes 8 à 9 relatives à la méthode, **caractérisée en ce que** la transmission du fichier HTML est initialisée par la requête de l'appareil de traitement de données (2).

11. Méthode selon la revendication 10 précédente relative à la méthode, **caractérisée en ce que**, pour l'initialisation, au moins un mot de passe enregistré dans le système de télécommunication (1) et/ou un identificateur de l'utilisateur sont transmis par l'appareil de traitement de données (2) au système de télécommunication (1).

12. Méthode selon l'une des revendications 8 à 11 précédentes relatives à la méthode, **caractérisée par** les étapes suivantes:
- une page HTML d'un module de communication (B) est demandée par l'appareil de traitement de données (2) équipé d'un browser Web, est chargée par l'intermédiaire de la liaison de données (3) dans le browser Web et est représentée au niveau de l'appareil de traitement de données (2) avec la surface du browser, le chargement se faisant via l'accès TCP/IP au système de télécommunication (1);
- en même temps, un module surfacique (C) référencé dans la page HTML est chargé dans le browser Web et est automatiquement traduit dans un langage machine spécifique à l'environnement;
- après l'entrée de données spécifiques à l'utilisateur (le nom, le mot de passe, la date initiale et la date finale, par exemple), le lancement du traitement est provoqué et un message correspondant, avec les paramètres nécessaires, est envoyé à un module de traitement (A) via le module de communication (B);
- le module de communication (B) extrait, conformément à une requête faite par le module surfacique (C), les blocs de données pertinents pour la facturation, qui ont été saisis et enregistrés, et les transmet au module surfacique (C) après requête;
- en même temps, une nouvelle page HTML avec des blocs de données pertinents pour la facturation est créée dynamiquement dans la mémoire du système de télécommunication (1) par le module de traitement (A);
- une fois la page HTML terminée, le module de traitement (A) envoie, via le module de communication (B), un bloc de données correspondant au module surfacique (C), à la suite de quoi
- celui-ci charge la page HTML terminée dans le browser Web de l'appareil de traitement de données (2).
